# FASCICULE DE BREVET EUROPEEN

(11) **EP 0 611 741 B1**
(45) Date de publication et mention de la délivrance du brevet: **19.11.1997**
(21) Numéro de dépôt: 94400273.2
(22) Date de dépôt: 09.02.1994
(51) Int. Cl.: C04B 35/80, B32B 18/00, B29C 65/00, B29D 24/00

(54) **Procédé de fabrication d'une pièce en matériau composite, notamment un panneau sandwich, à partir de plusieurs préformes assemblées**
Verfahren zur Herstellung eines Verbundmaterialkörpers, insbesondere einer Sandwichplatte, aus mehreren zusammengesetzten Vorformen
Process for the production of a workpiece made of composite material, especially a sandwich panel, from several preforms assembled together

(30) Priorité: 17.02.1993 FR 9301767
(43) Date de publication de la demande: 24.08.1994
(73) Titulaire: SOCIETE EUROPEENNE DE PROPULSION, 92150 Suresnes (FR)
(72) Inventeur: Castagnos, Stéphane, F-33560 Carbon Blanc (FR); Limousin, Jean-Louis, F-33290 Le Pian Medoc (FR)
(74) Mandataire: Joly, Jean-Jacques

(56) Documents cités:
- FR-A- 2 189 207
- GB-A- 1 387 868
- GB-A- 2 040 805
- GB-A- 2 088 282
- US-A- 3 900 650

## Description

La présente invention concerne un procédé de fabrication d'une pièce en matériau composite à partir de plusieurs préformes assemblées et densifiées par une matrice.

Un domaine particulier, mais non exclusif, d'application de l'invention est celui de la fabrication de panneaux sandwich en matériau composite thermostructural.

Par panneau sandwich, on entend ici une pièce constituée de deux faces minces de revêtement, ou peaux, reliées par une âme disposée entre les deux faces. L'âme est formée de cloisons de raidissement qui s'étendent perpendiculairement aux peaux et qui délimitent entre elles des alvéoles. Différents types d'âmes alvéolaires sont bien connus, telles que les âmes en nid d'abeilles, ondulées, tubulaires, à cupules, ...

Dans le domaine des composites froids, les procédés de liaison par collage entre les peaux et l'âme sont couramment maîtrisés.

Il en est autrement avec les matériaux composites thermostructuraux, c'est-à-dire les matériaux tels que les composites carbone-carbone ou les composites à matrice céramique dont les propriétés mécaniques les rendent aptes à constituer des éléments de structure et qui sont capables de conserver ces propriétés à des températures élevées.

Or, il existe un besoin pour des panneaux sandwich en matériau composite thermostructural, en particulier dans des applications aéronautiques et aérospatiales, par exemple pour former des pièces de structure d'avions spatiaux, d'avions hypersoniques, ou d'avions à propulsion combinée.

D'autres applications sont envisageables, notamment pour des pales et aubes de turbines, des supports de miroirs présentant une grande stabilité dimensionnelle, des carénages susceptibles d'être exposés à des flux thermiques importants, ou des cloisons pare-feu dans les domaines aéronautique, marin ou terrestre.

Pour la fabrication de pièces de forme complexe en matériau composite thermostructural, il est connu de procéder à la réalisation de préformes distinctes pour différentes parties des pièces, à l'assemblage des préformes dans un état non densifié ou incomplètement densifié puis à la co-densification des préformes assemblées.

Ainsi, pour la fabrication de panneau sandwich, il est décrit, notamment dans le document EP-A-0 051 535, un procédé qui consiste à déposer un liant thermolysable par enduction entre les faces en regard des préformes des peaux et de l'âme, avant leur densification complète, puis à réaliser la thermolyse du liant et la co-densification des peaux, de l'âme et du liant. Ce procédé présente l'inconvénient de ne pas autoriser une maîtrise uniforme de la qualité de la liaison, celle-ci étant fonction du liant utilisé et de la surface spécifique de liaison. En outre, la masse du panneau est pénalisée par la présence du liant.

Une autre technique connue consiste à mettre en oeuvre une liaison de type textile par couture ou implantation de fibres, mais une densité importante de points de liaison est nécessaire pour éviter la concentration de contraintes aux points de liaison et assurer une liaison suffisante.

Il est par ailleurs envisageable de réaliser un assemblage mécanique, par exemple par visserie, entre les parties constitutives d'une pièce en matériau composite, après densification de ces parties constitutives. Ces liaisons ainsi réalisées sont efficaces, mais ponctuelles. Dans le cas de panneaux sandwich, une réduction des concentrations de contraintes implique une géométrie complexe d'interface entre visserie et peaux ainsi que la présence d'inserts.

Selon encore un autre procédé connu, décrit dans le document GB-A-1 387 868, une liaison entre deux parties de pièce en matériau composite (polyester renforcé de fibres) peut être réalisée en insérant un élément de renfort constitué par un film portant une pluralité d'aiguilles rigides disposées perpendiculairement à la surface du film. Ce mode de liaison fait donc appel un élément supplémentaire qui doit être fabriqué séparément.

Enfin, dans le cadre de la réalisation de préformes par empilement de couches de tissu à plat, il est décrit dans le document FR-A-2 189 207 un procédé consistant à traiter la surface du tissu par abrasion pour faire foisonner des fibres. Le nombre de points de contact entre couches de tissu est ainsi augmenté, lesquels constituent autant de points de croissance de la matière pyrolytique formant la matrice lors de la densification ultérieure de la préforme. Il en résulte une augmentation de la résistance au délaminage entre couches du renfort. Ce procédé est appliqué aux éléments constitutifs d'une préforme, et non à la liaison de préformes déjà réalisées. En outre, ce procédé connu nécessite une intervention particulière, l'abrasion de la surface des couches de tissu, opération ayant un caractère destructeur.

Aussi, la présente invention a-t-elle pour but de fournir un procédé permettant d'assurer, de façon simple et peu coûteuse, une liaison efficace et uniforme entre préformes de différentes parties d'une pièce en matériau composite avant leur co-densification. L'invention a aussi pour but de fournir un tel procédé convenant particulièrement pour la fabrication d'un panneau sandwich en matériau composite thermostructural par assemblage et co-densification de préformes des peaux et de l'âme du panneau.

Ce but est atteint grâce à un procédé comportant :
- la réalisation de préformes distinctes pour différentes parties de la pièce,
- l'assemblage des préformes dans un état non densifié ou non complètement densifié, l'assemblage entre deux préformes étant réalisé au moins en partie par liaison entre des surfaces respectives en contact des deux préformes au moyen de fibrilles qui font saillie à la surface de l'une au moins des préformes et dans lesquelles s'imbrique la surface de l'autre préforme, et
- la co-densification des préformes assemblées,
procédé selon lequel, conformément à l'invention, avant assemblage des préformes, l'une au moins des préformes fibreuses est aiguilletée sur un substrat qui est ensuite séparé de la préforme pour laisser apparentes les extrémités de fibres de la préforme entraînées dans le substrat lors de l'aiguilletage, et former ainsi des fibrilles qui font saillie sensiblement perpendiculairement à la surface de la préforme.

Ainsi, les fibrilles sont obtenues en tirant profit de l'opération d'aiguilletage réalisée pour la fabrication de la préforme et ne requièrent pas d'opérations complexes particulières.

Dans le cas d'une préforme formée de strates fibreuses bidimensionnelles superposées et aiguilletées entre elles, le substrat peut être constitué par l'une au moins des strates superficielles de cette préforme qui est pelée pour laisser apparentes les extrémités de fibres qui ont été entraînées dans cette strate lors de l'aiguilletage et former ainsi les fibrilles.

Les surfaces en contact des préformes peuvent présenter toutes deux des fibrilles en saillie, de sorte que l'assemblage des préformes peut être réalisé au moins en partie par imbrication mutuelle de ces surfaces grâce aux fibrilles qu'elles présentent.

Le procédé conforme à l'invention tel que défini plus haut convient particulièrement à la réalisation de panneaux sandwich en matériau composite thermostructural. Dans ce cas, la préforme fibreuse d'une peau est aiguilletée sur un substrat qui est ensuite séparé de la préforme pour laisser apparentes les extrémités de fibres de la préforme entraînées dans le substrat lors de l'aiguilletage et former ainsi des fibrilles qui font saillie perpendiculairement à la surface de la préforme de la peau, et, ensuite, l'assemblage entre la préforme de la peau et la préforme de l'âme est réalisé au moins en partie au moyen des fibrilles dans lesquelles s'imbriquent les extrémités des cloisons de la préforme de l'âme.

D'autres particularités et avantages du procédé selon l'invention ressortiront à la lecture de la description faite ci-après à titre indicatif mais non limitatif, en référence aux dessins annexés sur lesquels :
- la figure 1 est une vue schématique en perspective d'une partie d'un panneau sandwich ;
- les figures 2A à 2F illustrent différentes étapes d'un mode de mise en oeuvre du procédé selon l'invention pour fabriquer le panneau de la figure 1 ;
- la figure 3 illustre une variante de mise en oeuvre du procédé selon l'invention ;
- les figures 4A à 4E illustrent différentes étapes d'une autre variante de mise en oeuvre du procédé selon l'invention pour fabriquer le panneau de la figure 1.

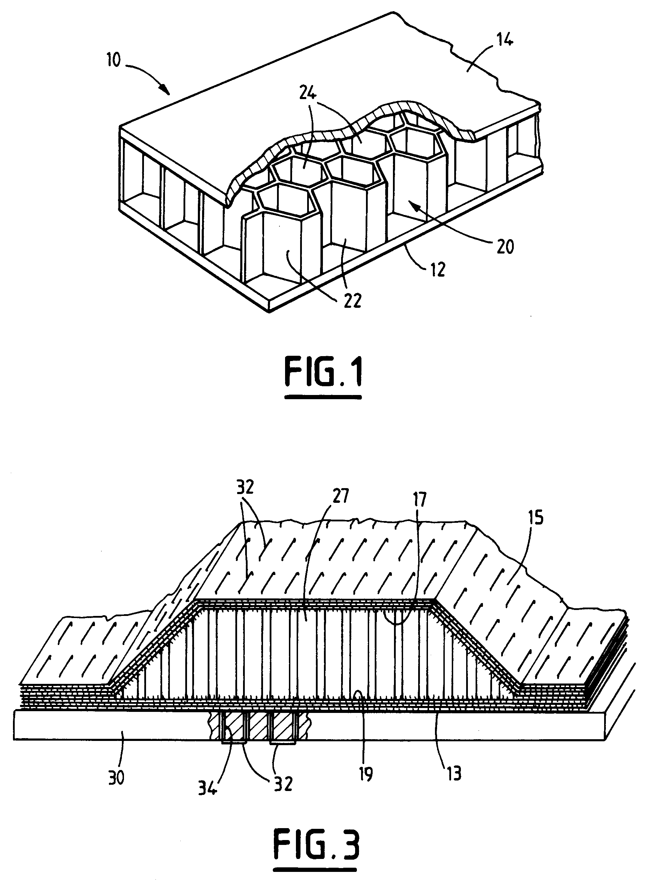

La figure 1 illustre un panneau 10 en matériau composite thermostructural, tel qu'un composite carbone-carbone (renfort en fibres de carbone densifié par une matrice en carbone) ou un composite à matrice céramique (renfort en fibres réfractaires -carbone ou céramique- densifié par une matrice céramique).

Le panneau 10 comprend deux revêtements, ou peaux 12, 14, et une âme alvéolaire formée de cloisons 22 qui s'étendent entre les peaux 12, 14 perpendiculairement à celles-ci. Dans cet exemple, les alvéoles 24 délimitées par les cloisons 22 ont une forme en nid d'abeilles, d'autres formes étant bien entendu possibles.

Pour la fabrication du panneau 10, il est procédé à la réalisation de préformes fibreuses différentes pour les peaux 12, 14 et l'âme 20.

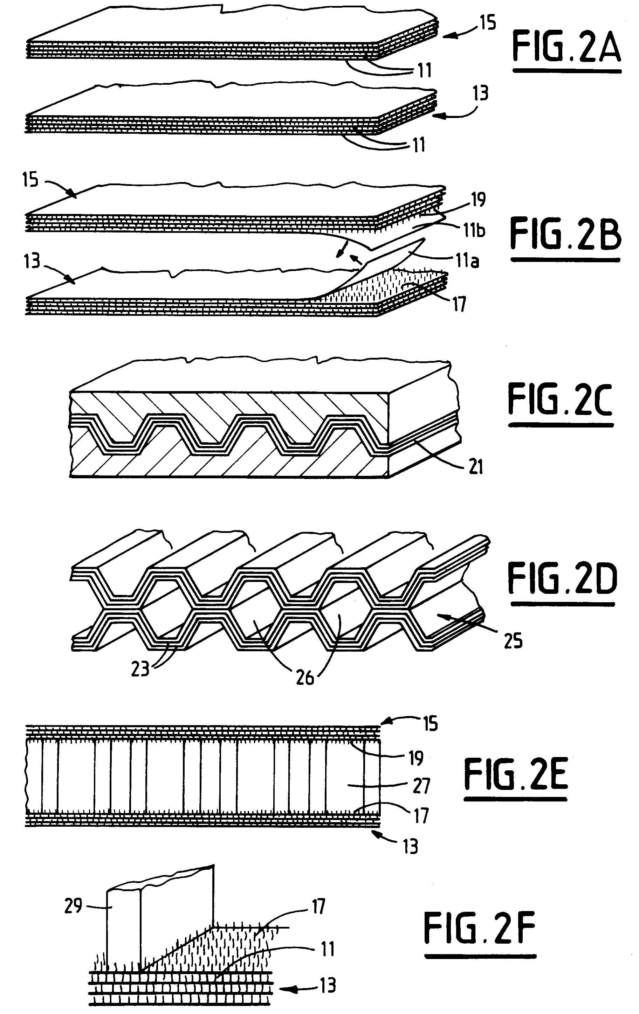

Les préformes 13, 15 des peaux sont formées par drapage (empilement) de strates fibreuses bidimensionnelles 11 (figure 2A). Les strates 11 sont constituées par exemple de couches de tissu, ou de nappes de câbles éventuellement avec interposition de voiles de fibres. Les strates 11 sont en fibres de carbone ou en fibres d'un précurseur de carbone tel que le polyacrylonitrile (PAN) préoxydé. le nombre de strates 11 est choisi en fonction de l'épaisseur désirée des peaux. Les strates 11 sont liées entre elles par aiguilletage. Un procédé d'aiguilletage de strates empilées à plat est décrit notamment dans le document FR-A-2 584 106.

L'aiguilletage des strates a pour effet de prélever des fibres dans les strates 11, ou les voiles de fibres interposées entre elles, et de disposer ces fibres perpendiculairement aux strates.

Après aiguilletage, une strate superficielle 11a au moins est pelée du reste de la préforme 13 (figure 2B). Les extrémités des fibres introduites dans la strate 11a lors de l'aiguilletage forment des fibrilles 17 qui font saillie perpendiculairement à la surface de la préforme 13. De façon similaire, une strate superficielle 11b au moins est pelée du reste de la préforme 15, laissant apparaître des fibrilles 19.

La préforme de l'âme 20 est formée par des feuilles cannelées obtenues par drapage et moulage de couches de tissu 21 préimprégnées par une résine (figure 2C). La résine est utilisée en quantité suffisante pour, après sa réticulation et sa pyrolyse, assurer un maintien (consolidation) des préformes des feuilles cannelées, sans toutefois les densifier complètement.

Les feuilles cannelées 23 obtenues après réticulation de la résine sont assemblées pour former un bloc 25 à alvéoles 26 (figure 2D). L'assemblage est par exemple réalisé par collage des parois en contact des feuilles 23 au moyen de la résine utilisée pour l'imprégnation des couches de tissu 21. Le bloc 25 est découpé à la longueur des alvéoles correspondant à l'épaisseur désirée du panneau (espacement entre les peaux). On obtient ainsi une préforme de l'âme 20, partiellement densifiée.

La préforme 27 ainsi obtenue est insérée entre les surfaces des préformes 13, 15 présentant les fibrilles 17, 19 (figure 2E). Comme le montre de façon plus détaillée la figure 2F, chaque partie 29 de la préforme 27 correspondant à une cloison 22 de l'âme s'étend perpendiculairement aux surfaces des préformes 13, 15. Les extrémités des parties 29 de préforme s'insèrent dans les fibrilles (17).

Les préformes 13, 15 et 27 ainsi assemblées sont co-densifiées par le matériau (carbone ou céramique) constitutif de la matrice. La co-densification est réalisée par exemple par infiltration chimique en phase vapeur. Les techniques d'infiltration chimique en phase vapeur de carbone ou de céramique sont bien connues. Après densification, on obtient un panneau semblable à celui illustré par la figure 1.

La pyrolyse de la résine d'imprégnation des couches de tissu 21 et de collage des feuilles 23 est réalisée préalablement à la co-densification. Il en est de même pour la carbonisation des fibres constitutives des strates 11 et/ou des couches 21 lorsque ces fibres sont, non pas en carbone, mais en un précurseur de celui-ci. Dans ce dernier cas, la carbonisation peut être réalisée sur les préformes 13, 15, 27 avant leur assemblage, et même avant le pelage des strates 11a, 11b.

Dans ce qui précède, les fibrilles des préformes 13, 15 sont avivées par pelage d'une ou plusieurs strates 11.

Les strates destinées à être pelées pourront être remplacées par un substrat sur lequel le reste des strates est aiguilleté. Lorsque les fibres des préformes 13, 15 sont en un précurseur de carbone, le substrat peut être constitué par exemple par une ou plusieurs couches de tissu en carbone. Par contre, lorsque les fibres des préformes 13, 15 sont en carbone, et qu'une carbonisation des préformes ne sera pas nécessaire, le substrat peut être constitué par une ou plusieurs feuilles de polyéthylène.

L'assemblage entre les préformes au moyen des fibrilles peut être complété par liage sur un conformateur, en utilisant un procédé similaire à celui décrit dans le document FR-A-2 660 591.

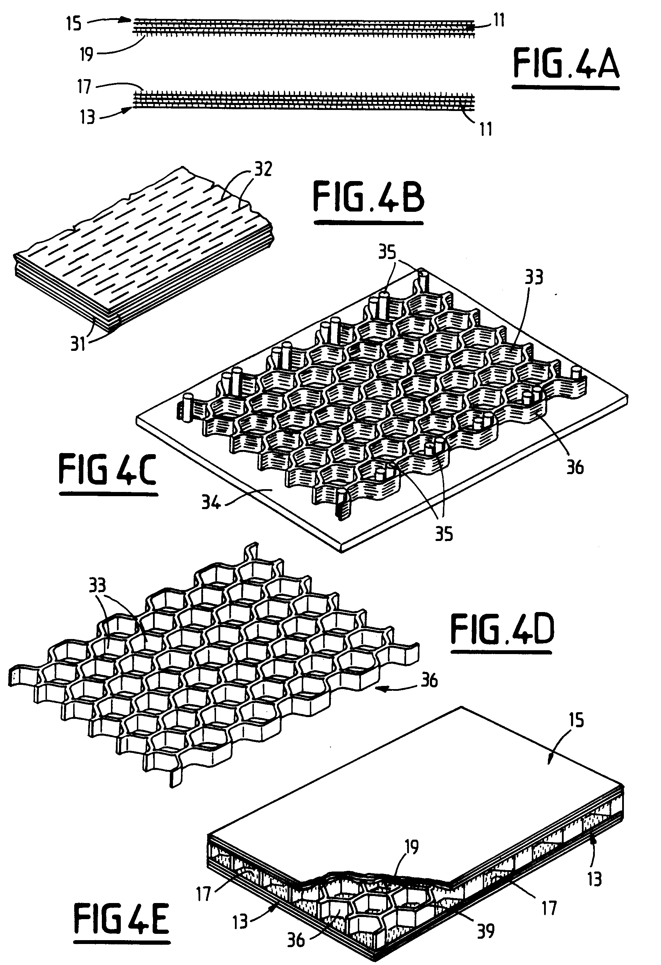

Dans l'exemple illustré par la figure 3, l'ensemble formé par la préforme 13, la préforme 27 et la préforme 15 est appliqué sur la face supérieure plane d'un conformateur 30 au moyen de fils de liage 32. La préforme 27 a, dans cet exemple, une forme de trapèze, les préformes 13 et 15 se rejoignant de part et d'autre de la préforme 27, la liaison entre les parties terminales des préformes 13 et 15 étant assurée par imbrication mutuelle entre les fibrilles de leurs surfaces en contact.

Les fils de liage 32 traversent la préforme 15, passent dans des alvéoles de la préforme 27, traversent la préforme 13 et passent dans des trous 34 du conformateur 30 en formant des lignes de couture parallèles.

Diverses formes pourront être données à la structure sandwich, y compris des formes tubulaires, les peaux formant alors deux tubes coaxiaux entre lesquels l'âme s'étend avec des alvéoles radiales.

Un autre mode de mise en oeuvre du procédé conforme à l'invention pour la fabrication d'un panneau tel que montré sur la figure 1, est illustré par les figures 4A à 4E.

Les préformes 13, 15 des peaux du panneau sont obtenues comme décrit plus haut, avec avivage des fibrilles 17, 19 par pelage d'une ou plusieurs strates superficielles (figure 4A).

La préforme alvéolaire de l'âme du panneau est fabriquée comme décrit dans la demande de brevet français No 92 06 790 intitulée "Structure en nid d'abeilles en matériau composite thermostructural et son procédé de fabrication".

En résumé, des strates fibreuses bidimensionnelles 31 sont superposées et liées par aiguilletage. Des découpes 32 en forme de fentes sont réalisées en quinconce, leur dimensions et localisations définissant les dimensions et formes des alvéoles. Les découpes sont réalisées dans des plans parallèles entre eux et perpendiculaires aux plans des strates (figure 4B).

Après réalisation des découpes, la préforme est étirée en direction perpendiculaire aux plans des découpes (figure 4C), ce qui se traduit par la formation d'alvéoles 33.

Après étirage, la préforme 36 obtenue est densifiée en étant maintenue à l'état étiré au moyen d'un outillage constitué par une sole 34 et des pions 35 implantés dans des alvéoles 33.

L'ensemble constitué par l'outillage 34, 35 et la préforme 36 est introduit dans un four dans lequel la préforme est densifiée partiellement par infiltration chimique en phase vapeur. La densification est réalisée de façon juste suffisante pour consolider la préforme de sorte qu'elle conserve sa forme après retrait de l'outillage (figure 4D).

La préforme 36 est introduite entre les préformes 13, 15. Les extrémités des parois des alvéoles 33 s'imbriquent dans les fibrilles 17, 19 présentes sur les préformes 13, 15 (figure 4E).

Les préformes ainsi assemblées sont soumises à une co-densification par infiltration chimique en phase vapeur conduisant au panneau recherché.

Dans ce qui précède, les fibrilles présentes à la surface d'au moins une des préformes à assembler sont constituées par des fibres de la préforme non densifiée. Afin de conférer aux fibrilles une plus grande rigidité, il pourra être procédé à leur consolidation avant assemblage des préformes. A cet effet, la ou chaque préforme munie de fibrilles est partiellement densifiée. Cette densification partielle peut être réalisée par voie liquide, c'est-à-dire imprégnation par une résine et pyrolyse, ou par voie gazeuse, c'est-à-dire infiltration chimique en phase vapeur. La consolidation de préformes fibreuses est une opération connue en soi, habituellement réalisée pour assurer une cohésion minimale entre les fibres permettant à la préforme d'être manipulable et de conserver sa forme sans l'assistance d'un outillage de maintien.

Les fibres ainsi rigidifiées se comportent pratiquement comme des picots, assurant une imbrication plus efficace entre les surfaces en contact des préformes assemblées.

La rigidité de ces picots permet aussi d'envisager l'assemblage de préformes qui en sont munies avec des préformes autres que fibreuses, par exemple des préformes constituées par des mousses, dans la surface desquelles les picots peuvent pénétrer, l'assemblage étant, comme précédemment, complété par co-densification.

Ainsi, dans le cas de la fabrication d'un panneau sandwich, les fibrilles rigidifiées obtenues par consolidation par densification partielle des préformes des peaux peuvent être engagées dans la surface d'une préforme d'une âme réalisée non pas sous forme d'une texture fibreuse, mais réalisée sous forme d'un bloc de mousse de faible densité avec lequel les préformes des peaux sont assemblées avant co-densification.

## Revendications

1. Procédé de fabrication d'une pièce en matériau composite comportant :
- la réalisation de préformes distinctes pour différentes parties de la pièce,
- l'assemblage des préformes dans un état non densifié ou non complètement densifié, l'assemblage entre deux préformes étant réalisé au moins en partie par liaison entre des surfaces respectives en contact des deux préformes au moyen de fibrilles qui font saillie à la surface de l'une au moins des préformes et dans lesquelles s'imbrique la surface de l'autre préforme, et
- la co-densification des préformes assemblées,
caractérisé en ce que, avant assemblage des préformes, l'une au moins des préformes fibreuses est aiguilletée sur un substrat qui est ensuite séparé de la préforme pour laisser apparentes les extrémités de fibres de la préforme entraînées dans le substrat lors de l'aiguilletage, et former ainsi des fibrilles qui font saillie sensiblement perpendiculairement à la surface de la préforme.

2. Procédé selon la revendication 1, caractérisé en ce que l'assemblage entre deux préformes est réalise au moins en partie par imbrication mutuelle de leurs surfaces en contact au moyen de fibrilles qui font saillie sur chacune de ces surfaces.

3. Procédé selon l'une quelconque des revendications 1 et 2, dans lequel une au moins des préformes est formée de strates fibreuses bidirectionnelles superposées et aiguilletées entre elles, caractérisé en ce que l'une au moins des strates superficielles de cette préforme est pelée pour laisser apparentes les extrémités de fibres qui ont été entraînées dans cette strate lors de l'aiguilletage et former ainsi les fibrilles.

4. Procédé selon l'une quelconque des revendications 1 à 3, caractérisé en ce que les fibrilles sont rigidifiées par consolidation par densification partielle de la préforme qui les porte, avant assemblage des préformes.

5. Procédé de fabrication d'un panneau sandwich en matériau composite, le panneau comprenant deux peaux rigides entre lesquelles est disposée une âme formée de cloisons perpendiculaires aux peaux, le procédé comportant :
- la réalisation de préformes distinctes pour les peaux et l'âme du panneau,
- l'assemblage des préformes dans un état non densifié ou non complètement densifié, et
- la co-densification des préformes assemblées,
caractérisé en ce que la préforme fibreuse d'une peau est aiguilletée sur un substrat qui est ensuite séparé de la préforme pour laisser apparentes les extrémités de fibres de la préforme entraînées dans le substrat lors de l'aiguilletage et former ainsi des fibrilles qui font saillie perpendiculairement à la surface de la préforme de la peau, et, ensuite, l'assemblage entre les préformes de la peau et de l'âme est réalisé au moins en partie par liaison entre leurs surfaces de contact au moyen des fibrilles dans lesquelles s'imbriquent les extrémités des préformes des cloisons.

6. Procédé selon la revendication 5, dans lequel la préforme d'une peau est formée de strates fibreuses bidimensionnelles superposées et aiguilletées entre elles, caractérisé en ce que l'une au moins de strates superficielles de la préforme est pelée pour laisser apparentes les extrémités de fibres qui ont été entraînées dans cette strate lors de l'aiguilletage et former ainsi les fibrilles.

7. Procédé selon l'une quelconque des revendications 5 et 6, caractérisé en ce que les fibrilles sont rigidifiées par consolidation par densification partielle des préformes fibreuses des peaux avant leur assemblage avec la préforme de l'âme.

8. Procédé selon la revendication 7, caractérisé en ce que les préformes des peaux munies de fibrilles rigidifiées sont assemblées avec une préforme d'âme constituée par une mousse.

9. Procédé selon l'une quelconque des revendications 5 à 8, caractérisé en ce que l'assemblage entre les préformes des peaux et de l'âme est complété par liage de l'ensemble sur un conformateur.

## Claims

1. A method of fabricating a composite material part, the method comprising:
making distinct preforms for different portions of the part;
assembling the preforms together while they are in a non-densified state or a state that is not completely densified, with two preforms being assembled together at least in part by bonding the respective surfaces in contact of the two preforms by means of fibrils that project from the surface of at least one of the preforms and in which the surface of the other preform engages ; and
co-densifying the assembled-together preforms;
characterised in that, before assembling the preforms together, at least one of the fiber preforms is needled to a substrate which is subsequently separated from the preform to reveal the ends of the fibers of the preform that have been entrained into the substrate during needling, thereby forming the fibrils that project substantially perpendicularly from the surface of the preform.

2. The method according to claim 1, characterised in that two preforms are assembled together at least in part by mutual engagement of their surfaces in contact by means of fibrils projecting from each of said surfaces.

3. The method according to any one of claims 1 and 2, in which at least one of the preforms is made up of superposed two-directional fiber plies that are needled together, characterised in that at least one of the surface plies of said preform is peeled off to reveal the ends of the fibers that have been entrained into said ply during needling, thereby forming the fibrils.

4. The method according to any one of claims 1 to 3, characterised in that the fibrils are made rigid by consolidating the preform that carries them by partial densification, prior to assembling the preforms together.

5. The method of fabricating a sandwich panel of composite material, the panel comprising two rigid skins between which a core is disposed, the core being constituted by partitions extending perpendicularly to the skins, the method comprising:
making distinct preforms for the skins and for the core of the panel;
assembling together the preforms in a non-densified state or in a state that is not completely densified; and
co-densifying the assembled-together preforms;
characterised in that the fiber preform of a skin is needled to a substrate which substrate is subsequently separated from the preform to reveal the ends of the fibers of the preform that have been entrained into the substrate during needling, thereby forming the fibrils that project perpendicularly from the surface of the skin preform, and then the skin preforms and the core preform are assembled together at least in part by bonding their contacting surfaces together by means of the fibrils in which the ends of the partition preforms are engaged.

6. The method according to claim 5, in which the preform of a skin is made up of superposed two-dimensional fiber plies that are needled together, characterised in that at least one of the surface plies of the preform is peeled off to reveal the ends of the fibers that have been entrained into said ply during needling, thereby forming the fibrils.

7. The method according to any one of claims 5 and 6, characterised in that the fibrils are made rigid by consolidating the fiber preforms of the skins by partial densification before assembling them together with the core preform.

8. The method according to claim 7, characterised in that the skin preforms provided with rigid fibrils are assembled together with a core preform constituted by a foam.

9. The method according to any one of claims 5 to 8, characterised in that the skin preforms and core preform are additionally assembled together by bonding the assembly together on a shaper.

## Patentansprüche

1. Fertigungsverfahren für ein Verbundstoff-Werkstück, umfassend:
- Ausbilden von verschiedenen Vorformlingen für unterschiedliche Teile des Werkstücks,
- Zusammensetzen der Vorformlinge in einem nicht verdichteten oder nicht vollständig verdichteten Zustand, wobei das Zusammensetzen von zwei Vorformlingen zumindest teilweise durch Verbinden voll miteinander in Berührung stehenden Oberflächen der beiden Vorformlinge mittels Fibrillen geschieht, die voll der Oberfläche mindestens eines der Vorfomlinge abstehen, und mit denen sich die Oberfläche des anderen Vorformlings verhakt, und
- gemeinsames Verdichten der zusammengesetzten Vorformlinge,
dadurch gekennzeichnet, daß vor dein Zusammensetzen der Vorformlinge zumindest einer der faserförmigen Vorformlinge auf ein Substrat genadelt wird, welches anschließend von dem Vorformling abgetrennt wird, um die Enden der Fasern des Vorformlings hervortreten zu lassen, die im Zuge der Nadelung in das Substrat getrieben wurden, und auf diese Weise Fibrillen zu bilden, die etwa rechtwinklig bezüglich der Oberfläche des Vorformlings vorstehen.

2. Verfahren nach Anspruch 1, dadurch gekennzeichnet, daß das Zusammensetzen zweier Vorformlinge zumindest teilweise durch gegenseitiges Verhaken ihrer in Berührung befindlichen Oberflächen über Fibrillen erfolgt, die auf jeder der Flächen vorstellen.

3. Verfahren nach Anspruch 1 oder 2, bei dem zumindest einer der Vorformlinge aus übereinandergelegten und unter sich vernadelten bidirektionalen Faserlagen gebildet ist, dadurch gekennzeichnet, daß zumindest eine der Oberflächenlagen dieses Vorformlings abgezogen wird, um die Enden von Fasern in Erscheinung treten zu lassen, die bei der Nadelung in diese Schicht eingetrieben wurden, um auf diese Weise die Fibrillen zu bilden.

4. Verfahren nach einem der Ansprüche 1 bis 3, dadurch gekennzeichnet, daß die Fibrillen durch Verfestigung mittels teilweiser Verdichtung des sie tragenden Vorformlings vor dem Zusammensetzen der Vorformlinge starr gemacht werden.

5. Fertigungsverfahren für eine Sandwichplatte aus Verbundstoff, wobei die Platte zwei starre Außenhäute enthält, zwischen denen sich eine Kernschicht befindet, die ihrerseits durch rechtwinklig zu den Außenhäuten verlaufende Trennwände gebildet wird, umfassend:
- Ausbilden von verschiedenen Vorformlingen für die Außenhäute und die Platten-Kernschicht,
- Zusammensetzen der Vorformlinge in einem nicht verdichteten oder nicht vollständig verdichteten Zustand, und
- gemeinsames Verdichten der zusammengesetzten Vorformlinge,
dadurch gekennzeichnet, daß der fasrige Vorformling einer Außenhaut auf ein Substrat genadelt wird, welches anschließend von dem Vorformling abgetrennt wird, um die Enden der Fasern des Vorformlings in Erscheinung treten zu lassen, die bei der Nadelung in das Substrat getrieben wurden, und um so Fibrillen zu bilden, die rechtwinklig voll der Oberfläche des Vorformlings der Außenhaut vorstehen, wobei anschließend das Zusammensetzen der Vorformlinge der Außenhaut und der Kernschicht zumindest teilweise durch Verbinden der miteinander in Berührung stehenden Oberflächen mit Hilfe von Fibrillen erfolgt, mit denen sich die Enden der Trennwand-Vorformlinge verhaken.

6. Verfahren nach Anspruch 5, bei dein der Vorformling einer Außenhaut gebildet wird durch übereinandergelegte und unter sich vernadelte zweidimensionale Faserlagen, dadurch gekennzeichnet, daß zumindest eine Oberflächenlage des Vorformlings abgezogen wird, um die Enden von Fasern in Erscheinung treten zu lassen, die bei der Nadelung in diese Lage eingetrieben wurden, um auf diese Weise die Fibrillen zu bilden.

7. Verfahren nach Anspruch 5 oder 6, dadurch gekennzeichnet, daß die Fibrillen durch Verfestigen mittels teilweiser Verdichtung der faserförmigen Vorformlinge der Außenhäute vor deren Zusammensetzen mit dem Vorformling der Kernschicht starr gemacht werden.

8. Verfahren nach Anspruch 7, dadurch gekennzeichnet, daß die Vorformlinge der Außenhäute, die mit erstarrten Fibrillen ausgestattet sind, mit einem durch einen Schaum gebildeten Kernschicht-Vorformling zusammengesetzt werden.

9. Verfahren nach einem der Ansprüche 5 bis 8, dadurch gekennzeichnet, daß das Zusammensetzen der Vorformlinge der Außenhäute und der Kernschicht vervollständigt wird durch ein Binden der Anordnung auf einer Quetschvorrichtung.
